# EUROPEAN PATENT APPLICATION

(11) **EP 4 617 235 A1**
(43) Date of publication of application: **17.09.2025**
(21) Application number: 23916134.2
(22) Date of filing: 10.11.2023
(51) Int. Cl.: C01B 32/50, B01D 53/14, B01D 53/18, B01D 53/62, B01D 53/78, C01F 11/18

(54) **METHOD FOR FIXING CARBON DIOXIDE**

(30) Priority: 12.01.2023 JP 2023003161
(71) Applicant: KABUSHIKI KAISHA KOBE SEIKO SHO (KOBE STEEL, LTD.), Hyogo 651-8585 (JP)
(72) Inventor: MURAKAMI, Kazuki, Takasago-shi, Hyogo 676-8670 (JP); SASAKI, Tatsuya, Nishi-ku, Kobe-shi, Hyogo 651-2271 (JP); SHIGEHISA, Takuo, Nishi-ku, Kobe-shi, Hyogo 651-2271 (JP); SAKAI, Koji, Takasago-shi, Hyogo 676-8670 (JP)
(74) Representative: TBK
(86) International application number: PCT/JP2023/040626
(87) International publication number: WO 2024/150516

(57) **Abstract**

A method for fixing carbon dioxide according to an aspect of the present invention includes: contacting a material containing calcium, with a mixed solution containing a polyol compound and water; aerating, with carbon dioxide, the mixed solution after the contacting; separating, from the mixed solution after the aerating, a precipitate to which the carbon dioxide has been fixed; and recovering the mixed solution from which the precipitate has been separated in the separating, wherein the mixed solution recovered in the recovering is used as at least part of the mixed solution with which the material is to be contacted.

## Description

### [TECHNICAL FIELD]

The present invention relates to a method for fixing carbon dioxide.

### [BACKGROUND ART]

In recent years, global warming has brought problems of climate change. Carbon dioxide in the atmosphere is one of greenhouse effect gases and is considered to be a main factor of global warming. Therefore, a reduction of carbon dioxide emissions, a decrease in the concentration of carbon dioxide in the atmosphere, and the like are required. As one of them, a method for fixing carbon dioxide has been known.

For example, a method for fixing carbon dioxide has been proposed in which calcium oxide and magnesium oxide contained in industrial wastes are contacted with water to elute calcium ions and magnesium ions into the water, the solution is contacted with a carbon dioxide gas to generate calcium carbonate and magnesium carbonate, whereby the carbon dioxide is fixed (Japanese Unexamined Patent Application, Publication No. H7-265688).

Furthermore, a method for fixing carbon dioxide has been proposed in which carbon dioxide is supplied into an aqueous solution containing a mixture of blast furnace slag and an alkali to fix the carbon dioxide to calcium eluted from the blast furnace slag (Japanese Patent No. 6653108).

### [PRIOR ART DOCUMENTS]

### [PATENT DOCUMENTS]

Patent Document 1: Japanese Unexamined Patent Application, Publication No. H7-265688
Patent Document 2: Japanese Patent No. 6653108

### [SUMMARY OF THE INVENTION]

### [PROBLEMS TO BE SOLVED BY THE INVENTION]

Because sufficient calcium cannot be extracted into the above-described water in light of the solubility of calcium in water, it may be impossible to sufficiently perform, by the method of Patent Document 1, even fixation of carbon dioxide to the calcium.

According to the method of Patent Document 2, an alkaline aqueous solution is used to extract calcium from blast furnace slag. However, because in an alkaline solution environment, the solubility of calcium generally saturates at a pH of approximately 12.5, it may be also impossible to extract sufficient calcium even by this method. Furthermore, according to the method of Patent Document 2, because a treatment device including a boiler, a hydrolysis reaction device, a condenser, and the like is used, capital investment is necessary, and it may be impossible to fix carbon dioxide at low cost.

In view of the foregoing circumstances, an object of the present invention is to provide a method for fixing carbon dioxide that enables efficiently fixing carbon dioxide at low cost.

### [MEANS FOR SOLVING THE PROBLEMS]

A method for fixing carbon dioxide according to an aspect of the present invention for solving the above problems includes: contacting a material containing calcium, with a mixed solution containing a polyol compound and water; aerating, with carbon dioxide, the mixed solution after the contacting; separating, from the mixed solution after the aerating, a precipitate to which the carbon dioxide has been fixed; and recovering the mixed solution from which the precipitate has been separated in the separating, wherein the mixed solution recovered in the recovering is used as at least part of the mixed solution with which the material is to be contacted.

### [EFFECTS OF THE INVENTION]

The method for fixing carbon dioxide of the present invention enables efficiently fixing carbon dioxide at low cost.

### [BRIEF DESCRIPTION OF THE DRAWINGS]

FIG. 1 is a conceptual view illustrating a method for fixing carbon dioxide according to an embodiment of the present invention.
FIG. 2 is a conceptual view illustrating a method for fixing carbon dioxide according to another embodiment of the present invention.
FIG. 3 is a conceptual view illustrating a method for fixing carbon dioxide according to still another embodiment of the present invention.
FIG. 4 is a graph showing an extraction status of a polyol compound in an extracting step when a step of contacting with water and the extracting step were performed after a contacting step.

### [DESCRIPTION OF EMBODIMENTS]

A method for fixing carbon dioxide according to an aspect of the present invention includes: a contacting step of contacting a material containing calcium, with a mixed solution containing a polyol compound and water; an aerating step of aerating, with carbon dioxide, the mixed solution after the contacting step; a separating step of separating, from the mixed solution after the aerating step, a precipitate to which the carbon dioxide has been fixed; and a recovering step of recovering the mixed solution from which the precipitate has been separated in the separating step, wherein the mixed solution recovered in the recovering step is used as at least part of the mixed solution with which the material is to be contacted.

According to the method for fixing carbon dioxide, the material is contacted with the mixed solution of the polyol compound and the water to extract calcium from the material containing calcium (Ca). Therefore, the calcium can be efficiently extracted as calcium ions into the mixed solution. When the mixed solution containing many calcium ions due to the contact with the material is aerated with carbon dioxide, the calcium ions and carbonate ions react with each other, and calcium carbonate is precipitated as the precipitate. In other words, because the mixed solution contains many calcium ions, much carbon dioxide can be fixed. Furthermore, because the method for fixing carbon dioxide does not require a relatively large facility for extracting calcium from the material, the carbon dioxide can be fixed at low cost. In addition, because the precipitate is separated from the mixed solution in which the precipitate has been precipitated, and the mixed solution is reused as the mixed solution for extracting calcium from the material, it is possible to fix the carbon dioxide at lower cost.

It is preferred that the method for fixing carbon dioxide further includes: a step of contacting with water, i.e., contacting, further with water, the material after the contacting step; and a step of recovering the contacted water, i.e., recovering the water after the step of contacting with water, wherein the water recovered in the step of recovering the contacted water is further used as at least part of the mixed solution with which the material is to be contacted. When the material after the contact with the mixed solution is contacted with the water, it is possible to remove the polyol compound remaining in fine voids of the material. When the water containing the polyol compound that has remained is further used as at least part of the mixed solution in the contacting step, the carbon dioxide can be fixed at much lower cost.

In place of the step of recovering the contacted water, the method for fixing carbon dioxide may further include: a step of separating the contacted water, i.e., separating the water after the step of contacting with water, into the polyol compound and the water; and a step of recovering the polyol compound separated in the step of separating the contacted water, wherein the polyol compound recovered in the step of recovering the polyol compound may be further used as at least part of the mixed solution with which the material is to be contacted. Also due to separating the polyol compound from the water containing the polyol compound that has remained in fine voids of the material in the step of contacting with water, and further using the polyol compound separated, as at least part of the mixed solution in the contacting step, it is possible to fix the carbon dioxide at much lower cost.

It is preferred that in the contacting step, a concentration of the polyol compound in the mixed solution is 60% by mass or less. Thus, the carbon dioxide can be fixed more efficiently.

The polyol compound is preferably a diol compound or a triol compound. Thus, calcium in the material can be more efficiently extracted as calcium ions.

The diol compound is preferably one, or two or more selected from the group consisting of ethylene glycol, propylene glycol, and diethylene glycol. Thus, calcium in the material can be still more efficiently extracted as calcium ions.

The triol compound is preferably glycerin. Thus, calcium in the material can be still more efficiently extracted as calcium ions.

As referred to herein, the "polyol compound" means an organic compound having a plurality of alcoholic hydroxyl groups (groups each obtained by substituting a hydrogen atom of an aliphatic hydrocarbon with a hydroxy group (-OH)). Similarly, as referred to herein, the "diol compound" means an organic compound having two of the alcoholic hydroxyl group, and the "triol compound" means an organic compound having three of the alcoholic hydroxyl group.

### Details of Embodiments

Hereinafter, the present invention will be described in detail with reference to the drawings as appropriate. It is to be noted that the drawings are merely illustrative and schematically illustrate each component (each member); therefore, the shape, dimension, etc. thereof may be different in an actual case, and some of various members such as a pump for transferring a substance (e.g., a mixed solution M described later, water, or the like), a valve for appropriately controlling the timing of transferring the substance, and the like may be omitted. Furthermore, the present specification may include a plurality of upper limit values and a plurality of lower limit values as numerical ranges of a component of the present invention. Such a plurality of upper limit values and such a plurality of lower limit values are presented as indicating that one value may be arbitrarily selected from each range, and the selected values may be arbitrarily combined.

### First Embodiment

A method for fixing carbon dioxide of an embodiment of the present invention mainly includes: a contacting step of contacting a material containing calcium, with a mixed solution containing a polyol compound and water; an aerating step of aerating, with carbon dioxide, the mixed solution after the contacting step; a separating step of separating, from the mixed solution after the aerating step, a precipitate to which the carbon dioxide has been fixed; and a recovering step of recovering the mixed solution from which the precipitate has been separated in the separating step. The mixed solution recovered in the recovering step is used as at least part of the mixed solution with which the material is to be contacted.

### Contacting Step

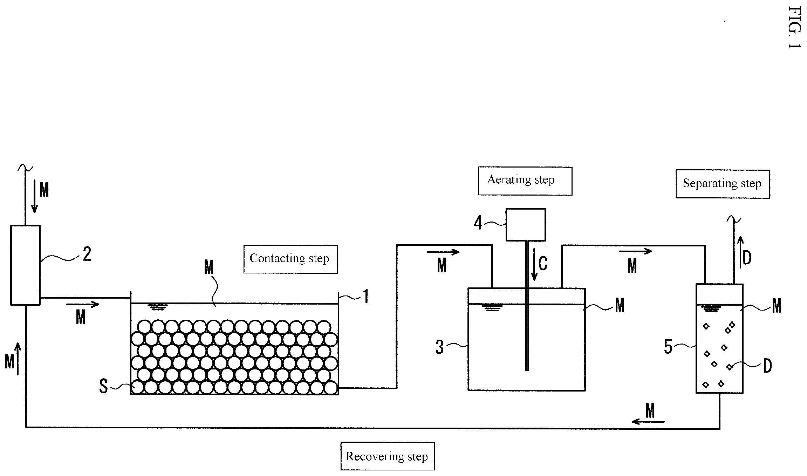

In the contacting step, the material containing calcium is contacted with the mixed solution containing the polyol compound and the water. Specifically, as shown in FIG. 1, a mixed solution M is supplied to a reaction vessel 1 containing a material S to contact the material S and the mixed solution M with each other. In other words, the method for fixing carbon dioxide includes, prior to the contacting step, a supplying step of supplying the material S and the mixed solution M to the reaction vessel 1.

In the supplying step, the mixed solution M, and the material S containing calcium are supplied to the reaction vessel 1. The reaction vessel 1 is not particularly limited as long as the reaction vessel 1 can contain a predetermined amount of the material S, and can be supplied with the mixed solution M and can discharge the mixed solution M.

Regarding the supply of the material S and the mixed solution M to the reaction vessel 1: the material S may be supplied to the reaction vessel 1 after the reaction vessel 1 is filled with an amount of the mixed solution M that enables immersing the material S; the mixed solution M may be supplied to the reaction vessel 1 after the material S is supplied to the reaction vessel 1; or the material S and the mixed solution M may be simultaneously supplied to the reaction vessel 1. Furthermore, after a certain amount of the material S is supplied, the material S may be added as appropriate.

In the contacting step, a certain amount of the mixed solution M is continuously supplied from a retaining tank 2, and a certain amount of the mixed solution M continues to be discharged. In other words, a certain amount of the mixed solution M does not continue to be retained in the reaction vessel 1, but the mixed solution M continues to be supplied to the reaction vessel 1 such that the mixed solution M passes through the reaction vessel 1 while contacting with the material S in the reaction vessel 1. The supply amount of the mixed solution M and the discharge amount of the mixed solution M may be the same amount or may be different amounts as long as a state in which the material S in the reaction vessel 1 is entirely immersed can be maintained. A time period during which the material S is contacted with the mixed solution M is appropriately set depending on the type (material properties) of the material S, the total amount of the material S, and the like.

For example, in the case in which the material S is steel slag, after the material S is contacted with the mixed solution M in the contacting step, the material S may be taken out from the reaction vessel 1 and then dried to be used as a resource for a base course material (road material) or a fertilizer, or the like.

### Material

The material S containing calcium is exemplified by slag such as blast furnace slag or steel slag, cement, concrete waste, glass waste, coal ash, and sludge incineration ash. In these materials, calcium is present in a form of, for example, calcium oxide (CaO). The above blast furnace slag means pig iron slag containing calcium and generated in a process of producing pig iron. The above steel slag means slag containing calcium and generated in a process of producing steel, such as converter slag or electric furnace slag.

### Polyol Compound

The above polyol compound means a medium for extracting calcium from the material S. The above polyol compound means an organic compound having a plurality of alcoholic hydroxyl groups. The alcoholic hydroxyl group as referred to herein means a hydroxy group obtained by substituting a hydrogen atom of an aliphatic hydrocarbon, and does not encompass a hydroxy group obtained by substituting a hydrogen atom of a hydrocarbon constituting an aromatic ring (for example, a hydroxy group of a phenol).

The above polyol compound is not particularly limited as long as it is an organic compound having a plurality of alcoholic hydroxyl groups, and, for example, a diol compound or a triol compound is preferred. Because the diol compound and the triol compound are typically in a liquid state under normal pressure and temperature, they can be relatively easily mixed with the above water to be contacted with the material S.

The above diol compound is not particularly limited as long as it is an organic compound having two alcoholic hydroxyl groups. The diol compound is exemplified by ethylene glycol, propylene glycol, diethylene glycol, butanediol, and diethanolamine. Of these, the diol compound is, for example, preferably one, or two or more selected from the group consisting of ethylene glycol, propylene glycol, and diethylene glycol.

For example, it is generally known that the solubility of calcium in ethylene glycol is approximately 10 times the solubility in water. In other words, the solubility of calcium in a diol compound is far higher than the solubility in water. Therefore, when the diol compound is one, or two or more selected from the above group, calcium can be more efficiently extracted from the material S.

The above triol compound is not particularly limited as long as it is an organic compound having three alcoholic hydroxyl groups, and, for example, glycerin is preferred. By using glycerin, calcium can be more efficiently extracted from the material S.

In the contacting step, the upper limit value of the concentration of the polyol compound in the mixed solution M is preferably 60% by mass, more preferably 50% by mass, and still more preferably 40% by mass. When the concentration of the polyol compound is greater than the upper limit value, precipitation of calcium carbonate in the aerating step described later may decrease. In other words, the efficiency of fixing carbon dioxide may decrease. In the contacting step, the lower limit value of the concentration of the polyol compound in the mixed solution M is preferably 20% by mass, and more preferably 30% by mass. When the concentration of the polyol compound is less than the lower limit value, a sufficient amount of calcium may not be eluted from the material S into the mixed solution M.

### Water

The above water serves as a supply source of protons (H⁺) for ionizing carbon dioxide (ionizing into carbonate ions). Furthermore, in the mixed solution M in the above contacting step, calcium ions extracted by the polyol compound are transferred to (diffused in) the water, and carbon dioxide is dissolved in the water as carbonate ions (CO₃²⁻). As a result, the calcium ions and the carbonate ions react with each other in the water as a reaction field to be precipitated as calcium carbonate. Such water is not particularly limited as long as it functions as a catalyst as described above. Such water is exemplified by pure water.

### Aerating Step

In the aerating step, the mixed solution M after the contacting step is aerated with carbon dioxide C. Specifically, the mixed solution M discharged from the reaction vessel 1 is retained in an aeration tank 3, and the mixed solution M retained is aerated with the carbon dioxide C. A procedure for the aeration is not particularly limited, and, for example, the carbon dioxide C may be discharged into the mixed solution M with a well-known gas blowing apparatus 4 or the like. It is preferred that the aeration with the carbon dioxide C is performed while the mixed solution M in the aeration tank 3 is agitated.

As the carbon dioxide C, carbon dioxide contained in gas discharged from a factory, or the like is preferably used. Alternatively, a mixed gas obtained by mixing the carbon dioxide C and another gas may be used for the aeration. In this case, the concentration of the carbon dioxide C in the mixed gas is not particularly limited. For example, the concentration of the carbon dioxide C in the mixed gas is not particularly limited, and may be a concentration equal to the concentration of carbon dioxide in the atmosphere, may be a concentration equal to the concentration of carbon dioxide in the above discharged gas, or may be a concentration obtained by diluting or concentrating the atmosphere or the discharged gas.

Calcium ions eluted from the material S have been dissolved in the water in the mixed solution M after the contacting step. When the mixed solution M that has been contacted with the material S is aerated with the carbon dioxide C, the carbon dioxide is dissolved, as carbonate ions, in the water in the mixed solution M, and the calcium ions and the carbonate ions react with each other in the water to be precipitated as calcium carbonate (precipitate).

### Separating Step

In the separating step, the precipitate to which the above carbon dioxide has been fixed is separated from the mixed solution M after the aerating step. In other words, the precipitate precipitated in the aerating step and the mixed solution M are separated from each other. A procedure for the separation is not particularly limited, and is exemplified by a procedure for performing solid-liquid separation with a well-known centrifuge 5 or the like.

The mixed solution M separated is used as part of the mixed solution M in the contacting step. When the mixed solution M is reused in this way, the carbon dioxide can be fixed at low cost. The precipitate separated can be used as, for example, part of a material for concrete, cement, or the like.

### Recovering Step

In the recovering step, the mixed solution M from which a precipitate D has been separated in the separating step is recovered. The mixed solution M is recovered into the retaining tank 1, and used as part of the mixed solution with which the material S is to be contacted. In other words, the mixed solution M after the separating step is reused. The mixed solution M recovered has a quality comparable to the quality of the mixed solution M before the contact with the material S because the precipitate D has been removed in the separating step.

### Advantages

According to the method for fixing carbon dioxide, because the material S containing calcium is contacted with the mixed solution M of the polyol compound and the water, it is possible to efficiently extract calcium in the material S. Therefore, the mixed solution M that has been contacted with the material S contains much calcium. When the mixed solution M is aerated with the carbon dioxide C, it is possible to efficiently fix the carbon dioxide. When the precipitate is separated and removed from the mixed solution M after the aeration, the mixed solution M after the separation can be reused as the mixed solution M for the contact with the material S. Therefore, the method for fixing carbon dioxide enables fixing carbon dioxide at low cost.

### Second Embodiment

A method for fixing carbon dioxide of another embodiment of the present invention includes the contacting step, the aerating step, the separating step, and the recovering step, and uses, as part of the mixed solution with which the material is to be contacted, the mixed solution recovered in the recovering step. The method for fixing carbon dioxide further includes: a step of contacting with water, i.e., contacting, further with water, the material after the contacting step; and a step of recovering the contacted water, i.e., recovering the water after the step of contacting with water, wherein the water recovered in the step of recovering the contacted water is further used as at least part of the mixed solution with which the material is to be contacted. The same components as those in the embodiment described above are given the same reference symbols, and description of those components will be omitted.

### Step of Contacting with Water

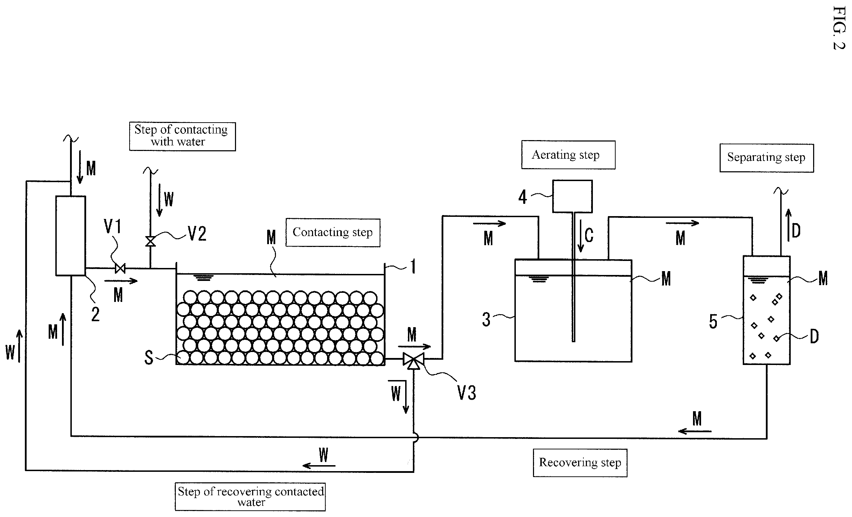

According to the method for fixing carbon dioxide of the present embodiment, after the material S is contacted with the sufficient mixed solution M, the material S is contacted further with water. Specifically, as shown in FIG. 2, a valve V1 is closed to stop the supply of the mixed solution M to the reaction vessel 1, and another valve V2 is opened to supply water W to the material S in the reaction vessel 1 and contact the material S with the water W. A certain amount of the water W is continuously supplied, and a certain amount of the water W continues to be discharged. The supply amount of the water W and the discharge amount of the water W may be the same amount or may be different amounts as long as a state in which the material S in the reaction vessel 1 is entirely immersed can be maintained. The water W to be used in the step of contacting with water may be the same as the water used for the mixed solution M in the contacting step.

When the material S that has been contacted with the mixed solution M is further contacted with the water W, it is possible to extract the polyol compound remaining in fine voids of the material S. Therefore, it is possible to efficiently dry the material S taken out from the reaction vessel 1 after the step of contacting with water.

### Step of Recovering Contacted Water

In the step of recovering the contacted water, the water W after the step of contacting with water is recovered. The water W after the step of contacting with water is recovered into the retaining tank 1. In the case in which the water W recovered advances the dilution of the polyol compound in the mixed solution M in the retaining tank 1, the polyol compound is preferably added to give a suitable concentration. In the water W that has been contacted with the material S in the step of contacting with water, the polyol compound that has remained in fine voids of the material S is dissolved. The water W containing the polyol compound is used as part of the mixed solution M in the contacting step. When the water W is reused in this way, the carbon dioxide can be fixed at lower cost.

### Advantages

The method for fixing carbon dioxide enables efficiently drying the material S taken out from the reaction vessel 1 because the material S after the contact with the mixed solution M is contacted with the water W. The method for fixing carbon dioxide enables fixing carbon dioxide at lower cost because the mixed solution M that has been contacted with the material S, and the water W that has been contacted with the material S are reused.

### Third Embodiment

A method for fixing carbon dioxide of another embodiment of the present invention includes the contacting step, the aerating step, the separating step, and the recovering step, and uses, as part of the mixed solution with which the material is to be contacted, the mixed solution recovered in the recovering step. The method for fixing carbon dioxide further includes: a step of contacting with water, i.e., contacting, further with water, the material after the contacting step; a step of separating the contacted water, i.e., separating the water after the step of contacting with water, into the polyol compound and the water; and a step of recovering the polyol compound separated in the step of separating the contacted water, wherein the polyol compound recovered in the step of recovering the polyol compound is further used as at least part of the mixed solution with which the material is to be contacted.

### Step of Contacting with Water

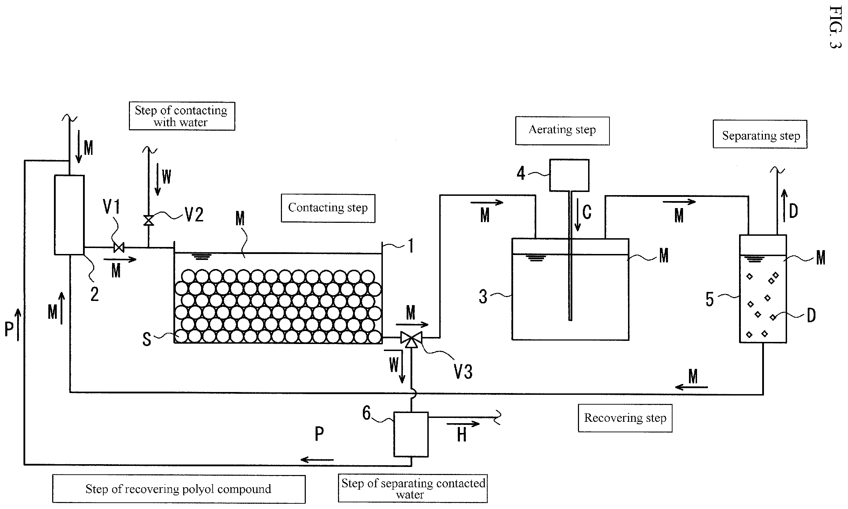

In the step of contacting with water, the material S is contacted further with water W after the material S is contacted with a sufficient mixed solution M. Specifically, as shown in FIG. 3, a valve V1 is closed to stop the supply of the mixed solution M to the reaction vessel 1, and another valve V2 is opened to supply the water W to the material S in the reaction vessel 1 and contact the material S with the water W.

### Step of Separating Contacted Water

In the step of separating the contacted water, a polyol compound P is separated from the water W after the step of contacting with water. Specifically, the water W after the step of contacting with water is separated into the water W and the polyol compound P with a separator 6. The separator 6 is not particularly limited, and, for example, a boiler, a multiple-effect evaporator, or the like can be used. The water W discharged from the reaction vessel 1 is supplied to the separator 6 by, for example, switching among flow paths with a three-way valve V3.

The water W separated in the step of separating the contacted water may be discharged as water vapor H from the separator 6. The water vapor H discharged may be returned to the water W and used as part of water with which the material S in the reaction vessel 1 is to be contacted.

### Step of Recovering Polyol Compound

In the step of recovering the polyol compound, the polyol compound P separated is recovered. The polyol compound P separated is recovered into the retaining tank 1. In the case in which the polyol compound P recovered advances the concentration of the polyol compound in the mixed solution M in the retaining tank 1, water is preferably added to give a suitable concentration. The polyol compound P recovered is used as part of the mixed solution M in the contacting step. When the polyol compound P is reused in this way, the carbon dioxide can be fixed at lower cost.

### Advantages

The method for fixing carbon dioxide enables fixing the carbon dioxide at lower cost because the mixed solution M that has been contacted with the material S, and the polyol compound P separated from the water W that has been contacted with the material S are reused.

It is to be noted that the present invention is not limited to the above embodiments. For example, in an adding step in the above embodiments, the mixed solution may contain other solvent aside from the water and the polyol compound. The other solvent is exemplified by a hydrophilic solvent. Examples of the hydrophilic solvent include ethanol, methanol, and the like. Furthermore, in the contacting step, a mixed solution of the polyol compound, and an aqueous solution obtained by dissolving an additive other than the solvent in water may be used.

### EXAMPLES

Hereinafter, the present invention is further described by way of Examples; the present invention is not limited to the Examples.

### Example 1

A mixed solution of 50% by mass glycerin and water (pure water) was prepared as Test Example 1. 50 g of converter slag with an average grain size of 10 mm was prepared as a material containing calcium. The material and the mixed solution were placed in a beaker in a mass ratio of 1:10 and shaken at 200 spm at room temperature.

The material and the mixed solution of Test Example 1 were subjected to solid-liquid separation with filter paper, and the mixed solution separated was recovered and used as a mixed solution of Test Example 2. 50 ml was taken out from the mixed solution of Test Example 2 to measure the calcium concentration and calculate the amount of extracted calcium in Test Example 1. Thereafter, the mixed solution of Test Example 2 was aerated with carbon dioxide at 0.5 L/min for 30 minutes to precipitate calcium carbonate.

The calcium carbonate was filtered and separated from the mixed solution of Test Example 2 with filter paper to obtain a mixed solution of Test Example 3. The same material as that of Test Example 1 was newly prepared. This material and the mixed solution of Test Example 3 were placed in a beaker, and shaken under the same conditions as those of Test Example 1.

The mixed solution and the material of Test Example 3 were subjected to solid-liquid separation with filter paper, and the mixed solution separated was recovered and used as a mixed solution of Test Example 4. 50 ml was taken out from the mixed solution of Test Example 4 to measure the calcium concentration and calculate the amount of extracted calcium in Test Example 3. Thereafter, the mixed solution of Test Example 4 was aerated under the same conditions as those of Test Example 2.

Calcium carbonate was filtered and separated from the mixed solution of Test Example 4 with filter paper to obtain a mixed solution of Test Example 5. The same material as that of Test Example 1 was newly prepared. This material and the mixed solution of Test Example 5 were placed in a beaker, and shaken under the same conditions as those of Test Example 1.

The mixed solution and the material of Test Example 5 were subjected to solid-liquid separation with filter paper, and the mixed solution separated was recovered and used as a mixed solution of Test Example 6. 50 ml was taken out from the mixed solution of Test Example 6 to measure the calcium concentration and calculate the amount of extracted calcium in Test Example 5. Thereafter, the mixed solution of Test Example 6 was aerated under the same conditions as those of Test Example 2.

Calcium carbonate was filtered and separated from the mixed solution of Test Example 6 with filter paper to obtain a mixed solution of Test Example 7. The same material as that of Test Example 1 was newly prepared. This material and the mixed solution of Test Example 7 were placed in a beaker, and shaken under the same conditions as those of Test Example 1.

The mixed solution and the material of Test Example 7 were subjected to solid-liquid separation with filter paper. 50 ml was taken out from the mixed solution separated, to measure the calcium concentration and calculate the amount of extracted calcium in Test Example 7.

Table 1 shows Test Examples 1 to 7. In Table 1, "-" indicates that there is no applicable matter. In Table 1, water temperature "RT" indicates that the measurement was performed at room temperature. In each Test Example, the gradual decrease in the amount of the mixed solution was due to the sampled part of the mixed solution. In each of Test Examples 2 and 5, 20 ml of water was added. In Test Example 6, 10 ml of water was added.

**Table 1**

| Test Example | Mixed solution | Amount of mixed solution [ml] | Material | Amount of material [g] | Shaking time [hr] | Water temperature [°C] | Gas type | Gas flow rate [L/min] | Blowing time [hr] |
|---|---|---|---|---|---|---|---|---|---|
| 1 | glycerin:water = 50:50 | 500 | converter slag | 50 | 1 | RT | - | - | - |
| 2 | filtered solution of Test Example 1 | 450 | - | - | - | - | CO₂ | 0.5 | 0.5 |
| 3 | filtered solution of Test Example 2 | 400 | converter slag | 40 | 1 | RT | - | - | - |
| 4 | filtered solution of Test Example 3 | 330 | - | - | - | - | CO₂ | 0.5 | 0.5 |
| 5 | filtered solution of Test Example 4 | 300 | converter slag | 30 | 1 | RT | - | - | - |
| 6 | filtered solution of Test Example 5 | 230 | - | - | - | - | CO₂ | 0.5 | 0.5 |
| 7 | filtered solution of Test Example 6 | 200 | converter slag | 20 | 1 | RT | - | - | - |

Table 2 shows the results of the amount of extracted calcium, the pH, and the proportion of water in each mixed solution, in each of Test Examples 1, 3, 5, and 7.

**Table 2**

| Test Example | Mixed solution | Amount of extracted calcium (Ca²⁺) | pH [-] | Water proportion [wt%] |
|---|---|---|---|---|
| 1 | glycerin:water = 50:50 | 5.9 | 12.2 | 44.2 |
| 3 | filtered solution of Test Example 2 | 5.8 | 12.3 | 43.4 |
| 5 | filtered solution of Test Example 4 | 6.2 | 12.3 | 49.3 |
| 7 | filtered solution of Test Example 6 | 7.7 | 12.4 | 50.0 |

Table 2 shows that the mixed solution reused in each of Test Examples 3, 5, and 7 achieved the amount of extracted calcium comparable to that of the mixed solution which was not reused in Test Example 1. Furthermore, little change was observed also with respect to the pH and the proportion of the water in the mixed solution. From this, it can be seen that even if the mixed solution is reused, the efficiency of fixing carbon dioxide can be maintained.

### Example 2

As a reaction vessel, a column with an internal diameter of 42 mm and a total length of 230 mm (internal volume of 330 cm³) was prepared. A material of 450 g-dry converter slag was packed into the column, and a mixed solution was supplied into the column to be contacted with the material. As the mixed solution, 40% by mass glycerin and water were used. The mixed solution was supplied into the column at 0.08 mm/s. The column was disposed so that its longitudinal direction was vertical, and the mixed solution was supplied from below, and the mixed solution was discharged from above.

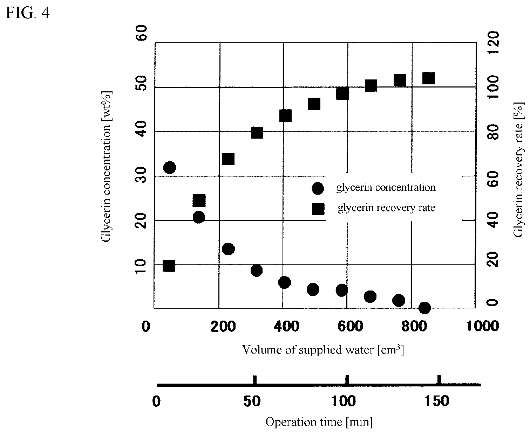

After calcium of the material was extracted and the supply of the mixed solution was stopped, water was supplied to the column in the same manner as the mixed solution. The discharged water was recovered at predetermined time intervals, and dried at 70 °C for 8 hours or more, and from the weight change, the concentration of glycerin in the discharged water was calculated. The results are shown in FIG. 4.

From FIG. 4, it can be seen that the total amount of the glycerin remaining in the material in the column can be recovered by supplying water approximately three times the internal volume of the column. Furthermore, water up to approximately three times the internal volume of the column may be a mixed solution reusable.

### [INDUSTRIAL APPLICABILITY]

The present invention enables efficiently fixing carbon dioxide to calcium at low cost, and thus can contribute to controlling the amount of carbon dioxide emitted to the atmosphere while effectively using materials containing calcium.

### [EXPLANATION OF THE REFERENCE SYMBOLS]

1: Reaction vessel
2: Retaining tank
3: Aeration tank
4: Gas blowing apparatus
5: Centrifuge
6: Separator
C: Carbon dioxide
D: Precipitate
H: Water (water vapor)
M: Mixed solution
P: Polyol compound
S: Material
V1, V2: Valve
V3: Three-way valve
W: Water

## Claims

1. A method for fixing carbon dioxide, the method comprising:
contacting a material comprising calcium, with a mixed solution comprising a polyol compound and water;
aerating, with carbon dioxide, the mixed solution after the contacting;
separating, from the mixed solution after the aerating, a precipitate to which the carbon dioxide has been fixed; and
recovering the mixed solution from which the precipitate has been separated in the separating,
wherein the mixed solution recovered in the recovering is used as at least part of the mixed solution with which the material is to be contacted.

2. The method for fixing carbon dioxide according to claim 1, further comprising:
contacting with water, i.e., contacting, further with water, the material after the contacting; and
recovering the contacted water, i.e., recovering the water after the contacting with the water,
wherein the water recovered in the recovering of the contacted water is further used as at least part of the mixed solution with which the material is to be contacted.

3. The method for fixing carbon dioxide according to claim 1, further comprising:
contacting with water, i.e., contacting, further with water, the material after the contacting;
separating the contacted water, i.e., separating the water after the contacting with the water, into the polyol compound and the water; and
recovering the polyol compound separated in the separating of the contacted water,
wherein the polyol compound recovered in the recovering of the polyol compound is further used as at least part of the mixed solution with which the material is to be contacted.

4. The method for fixing carbon dioxide according to claim 1, 2, or 3, wherein in the contacting, a concentration of the polyol compound in the mixed solution is 60% by mass or less.

5. The method for fixing carbon dioxide according to claim 1, 2, or 3, wherein the polyol compound is a diol compound or a triol compound.

6. The method for fixing carbon dioxide according to claim 5, wherein the diol compound is one, or two or more selected from the group consisting of ethylene glycol, propylene glycol, and diethylene glycol.

7. The method for fixing carbon dioxide according to claim 5, wherein the triol compound is glycerin.
